# FASCICULE DE BREVET EUROPEEN

(11) **EP 3 406 931 B1**
(45) Date de publication et mention de la délivrance du brevet: **01.04.2020**
(21) Numéro de dépôt: 18166928.4
(22) Date de dépôt: 12.04.2018
(51) Int. Cl.: F16F 9/49, F16F 9/512, F16F 9/516, F16F 9/346

(54) **BUTÉE HYDRAULIQUE AUTO-AJUSTABLE POUR LA FIN DE COURSE D'UN MOUVEMENT OSCILLANT**
SELBSTREGULIERENDER HYDRAULISCHER ANSCHLAG FÜR DEN ENDANSCHLAG EINER SCHWINGUNGSBEWEGUNG
SELF-ADJUSTING HYDRAULIC ABUTMENT FOR THE END-OF-TRAVEL OF AN OSCILLATING MOVEMENT

(30) Priorité: 24.05.2017 FR 1754603
(43) Date de publication de la demande: 28.11.2018
(73) Titulaire: PSA Automobiles SA, 78300 Poissy (FR)
(72) Inventeur: GROULT, Anatonin, 78740 Vaux Sur Seine (FR)

(56) Documents cités:
- FR-A1- 2 902 850
- FR-A1- 2 973 853
- FR-A1- 3 013 413
- GB-A- 311 079
- US-A1- 2016 025 174

## Description

La présente invention concerne une butée hydraulique pour l'amortissement d'un mouvement oscillant, ainsi qu'un amortisseur télescopique et un véhicule comportant une suspension, équipés de ce type de butée hydraulique.

Les véhicules automobiles comportent généralement pour chaque roue une suspension comprenant un ressort de suspension, et un amortisseur télescopique hydraulique qui freine les mouvements de la suspension. En particulier l'amortisseur télescopique peut comporter une butée hydraulique de fin de course, qui freine le mouvement de la suspension pour éviter un choc à la fin de la course.

Un type de butée hydraulique connu, en particulier pour un amortisseur de suspension de véhicule, présenté notamment par le document FR-A1-2902850, comporte une tige de vérin comprenant à son extrémité un piston descendant avant la fin de course dans une chambre formée dans un tube intérieur qui est ajusté dans un tube extérieur. L'ensemble est contenu dans un corps rempli d'un fluide.

Le tube extérieur comporte une commande manuelle ou automatique disposée à l'extérieur du corps, permettant sa rotation autour de son axe principal. Les tubes intérieur et extérieur présentent une série de perçages répartis axialement, qui suivant la position angulaire du tube extérieur peuvent être entièrement alignés entre eux afin de former un passage maximum du fluide, ou progressivement désalignés afin d'obtenir une réduction de ce passage.

On obtient une butée hydraulique de fin de course présentant une force de freinage de plus en plus élevée en fonction de l'avancement du piston, fermant un nombre croissant de perçages répartis axialement. De plus le réglage de la position angulaire du tube extérieur donne différentes lois de freinage, permettant pour un amortisseur de suspension d'un véhicule, de s'adapter à la charge de ce véhicule.

Toutefois ce type de réglage extérieur des lois de freinage nécessite une intervention manuelle pour régler cette loi dans le cas d'une commande manuelle, ou un système de pilotage automatique extérieur qui complique l'installation et augmente les coûts.

La présente invention a notamment pour but d'éviter ces inconvénients de la technique antérieure.

Elle propose à cet effet une butée hydraulique pour l'amortissement d'une fin de course d'un mouvement oscillant, comprenant une chemise annulaire ajustée autour d'un cylindre fixé à un corps, prévue pour se déplacer axialement vers l'avant lors d'une compression en refoulant un fluide vers une chambre intérieure formée dans ce cylindre en passant par des perçages répartis axialement, cette butée étant remarquable en ce que la chambre intérieure comporte un boisseau coulissant dans le cylindre en fermant ou ouvrant des perçages additionnels de ce cylindre, ce boisseau étant relié à la chemise annulaire par un ressort de poussée qui dans la fin de course pousse le boisseau vers l'avant, et étant relié au corps par un amortisseur hydraulique, et par un ressort de rappel qui le rappel vers l'arrière en développant un force inférieure à celle du ressort de poussée.

Un avantage de cette butée hydraulique est que pour un mouvement d'oscillation de la chemise annulaire présentant une compression plus importante avec une position moyenne de cette oscillation disposée plus vers l'avant, le ressort de poussée tendant à descendre le boisseau, finit par vaincre l'amortisseur hydraulique présentant une dynamique lente en comprimant le ressort de rappel, ce qui positionne ce boisseau plus bas.

On dispose alors les perçages additionnels du cylindre de manière à obtenir dans cette position plus basse du boisseau une loi d'amortissement différente, en particulier donnant un freinage plus élevé pour augmenter l'amortissement dans le cas d'une suspension d'un véhicule plus chargé.

On réalise de manière simple, efficace et économique, sans intervention manuelle ni système de commande extérieure, une adaptation automatique de la loi de freinage de la butée hydraulique suivant la position moyenne du mouvement oscillant.

La butée hydraulique selon l'invention peut de plus comporter une ou plusieurs des caractéristiques suivantes, qui peuvent être combinées entre elles.

Avantageusement, l'amortisseur hydraulique comporte des passages calibrés du fluide donnant pour le boisseau à partir d'une position comprimée, sous l'effet du ressort de rappel un temps de détente complet supérieur à trois secondes.

Avantageusement, les perçages additionnels présentent une section de passage libre qui est réduite quand le boisseau est dans la position la plus en avant.

Avantageusement, le ressort de poussée est un ressort hélicoïdal disposé en arrière du boisseau.

Avantageusement, le boisseau comporte à l'intérieur une chambre hydraulique de contrôle, fermée vers l'avant par un pion ajusté dans un alésage de ce boisseau formant l'amortisseur hydraulique.

Dans ce cas, avantageusement le ressort de rappel est disposé à l'intérieur de la chambre hydraulique de contrôle.

Avantageusement, l'amortisseur hydraulique comporte une chambre hydraulique de contrôle disposant d'un clapet permettant une sortie du fluide en dehors de cette chambre de contrôle.

En particulier, le ressort de rappel peut presser une bille formant le clapet.

L'invention a aussi pour objet un amortisseur télescopique prévu pour une suspension de véhicule, comportant une butée hydraulique de fin de course comprenant l'une quelconque des caractéristiques précédentes.

L'invention a de plus pour objet un véhicule automobile équipé de suspensions comportant des butées hydrauliques comprenant l'une quelconque des caractéristiques précédentes.

L'invention sera mieux comprise et d'autres caractéristiques et avantages apparaîtront plus clairement à la lecture de la description ci-après donnée à titre d'exemple et de manière non limitative, en référence aux dessins annexés dans lesquels :
- les figures 1 et 2 sont des vues en coupe axiale d'une butée d'attaque hydraulique selon l'art antérieur, intégrée dans un amortisseur télescopique de suspension, présentée respectivement avant le travail de cette butée et pendant son travail ;
- la figure 3 est un graphique présentant l'effort appliqué par cette butée d'attaque en fonction de sa course pour différentes vitesses ;
- la figure 4 est une vue en coupe axiale d'une butée d'attaque selon l'invention ;
- les figures 5a et 5b sont des vues de détail de l'amortisseur hydraulique de cette butée, présenté respectivement dans une position haute et basse ; et
- la figure 6 est un graphique présentant pour cette butée l'effort appliqué en fonction de sa course pour deux positions moyennes d'oscillation.

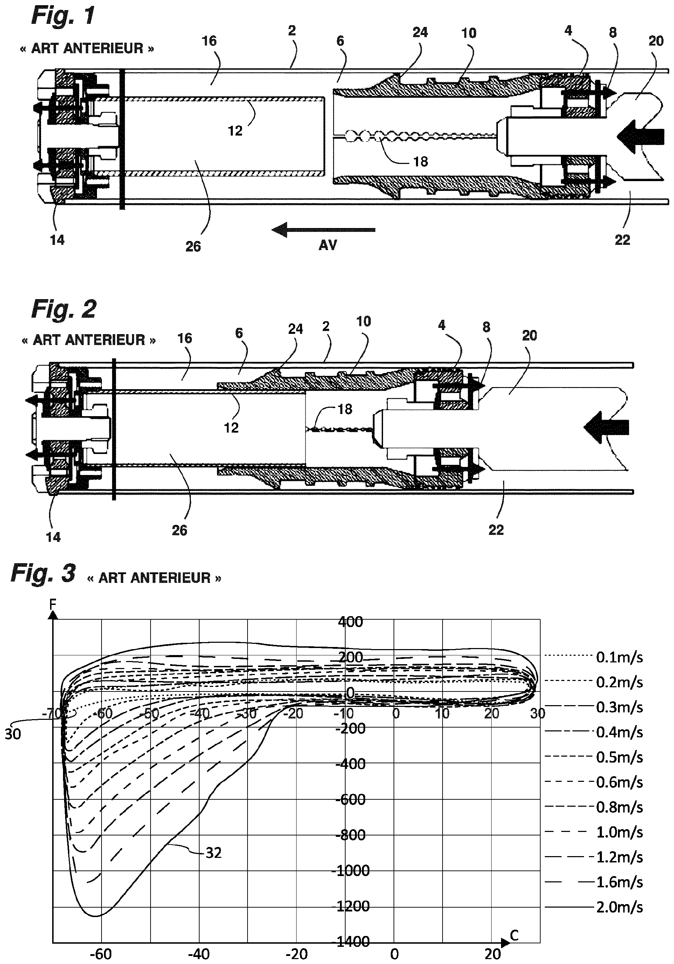

La figure 1 présente un amortisseur télescopique comportant un corps extérieur cylindrique 2 formant un tube, contenant un piston 4 fixé à l'extrémité d'une tige d'amortisseur 20, coulissant axialement dans ce corps avec une étanchéité pour délimiter une chambre avant 6 et une chambre arrière 22.

Le piston 4 comporte des passages réduits du fluide 8 entre la chambre avant 6 et la chambre arrière 22, qui freinent son mouvement en fonction de la direction et de la vitesse de passage du fluide, et donc de la vitesse de la tige d'amortisseur 20.

Le piston 4 se prolonge du côté appelé par convention côté avant, indiqué par la flèche « AV », par une chemise circulaire 10 qui s'emboîte vers la fin de course dans une chambre extérieure annulaire 16, en s'ajustant autour d'un tube de butée de fin de course 12 formant un cylindre. Le tube de butée 12 définissant à l'intérieur une chambre intérieure 26, est fixé par son extrémité avant à un couvercle 14 fermant l'extrémité avant du corps extérieur 2.

La chemise 10 comporte un bossage annulaire extérieur 24 assurant son guidage dans le corps extérieur 2, et une série de perçages radiaux 18 alignés axialement, qui présentent en direction de l'arrière un diamètre de plus en plus réduit.

Lors de l'avance de la chemise 10 dans la chambre extérieure 16, autour du tube de butée 12, présentée figure 2, le fluide de cette chambre extérieure est refoulé vers la chambre intérieure 26 par les perçages 18 de section calibrée pour réaliser un freinage de l'avance de la tige de l'amortisseur 20. Le fluide passe ensuite de la chambre intérieure 26 vers le volume arrière 22 par les passages réduits 8 du piston 4.

Parallèlement en fonction de l'avance de la tige 20, les perçages 18 de la chemise 10 se ferment progressivement ce qui réduit de plus en plus la section totale de passage du fluide de la chambre extérieure 6 vers la chambre intérieure 26, et augmente la force de freinage qui devient très importante près de la fin de course.

On obtient un freinage progressif de plus en plus important de la tige de l'amortisseur 20, que l'on détermine en ajustant les diamètres et les positions des perçages 18 de la chemise 10.

La figure 3 présente la force F de freinage de la butée d'attaque exprimée en daN sur l'axe vertical, qui est négative pour un freinage, en fonction de la course C exprimée en millimètre, pour différentes vitesses de déplacement du piston 4. Pour chaque vitesse on a un début de course de la butée d'attaque à -25mm, puis une course vers les valeurs négatives donnant une force de freinage de plus en plus importante qui provient de la fermeture progressive des perçages 18.

En particulier pour une petite vitesse présentée par la courbe 30 qui est de 0.1m/s, on obtient une force maximum de freinage d'environ 100daN. Pour une grande vitesse présentée par la courbe 32 qui est de 2m/s, on obtient une force maximum de freinage de 1300daN.

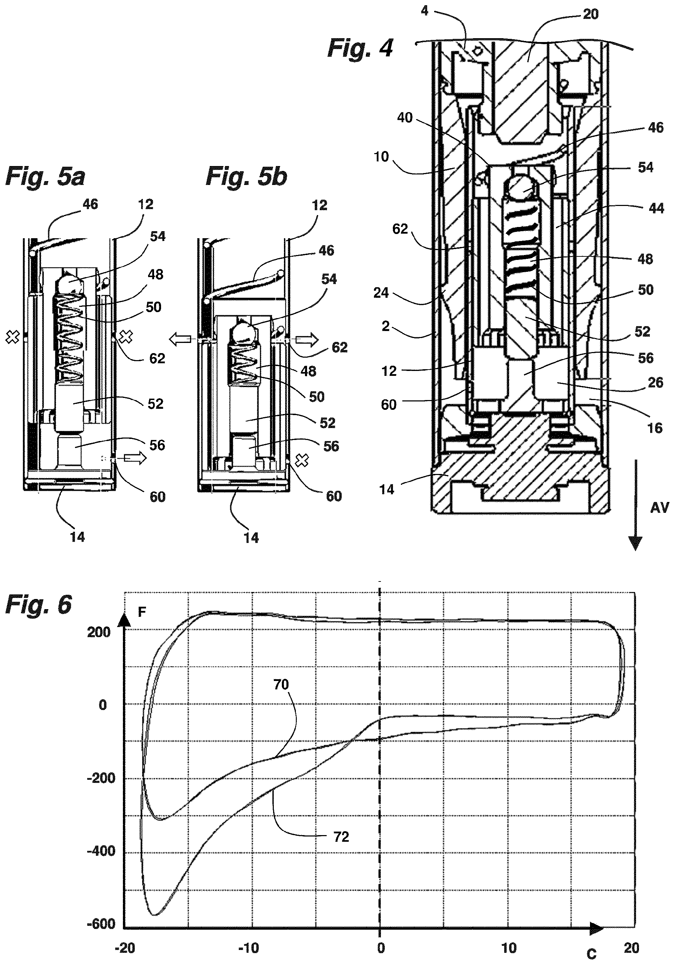

Les figures 4, 5a et 5b présentent une butée d'attaque comportant un boisseau 40 ajusté à l'intérieur du tube de butée 12, qui dispose de perçages axiaux 44 permettant un libre passage du fluide des deux côtés formant la chambre intérieure 26.

En particulier le boisseau 40 présentant une forme axiale, peut être réalisé de manière économique par frittage de poudres métalliques.

Un ressort hélicoïdal de poussée 46 est disposé entre le piston 4 et le boisseau 40, pour appliquer sur ce boisseau après une course de compression suffisante de l'amortisseur télescopique, une force vers l'avant en venant à son contact.

Le boisseau 40 comporte une chambre axiale de contrôle 48 contenant un ressort hélicoïdal de rappel 50, qui prend appui vers le bas sur un pion cylindrique calibré 52 ajusté dans cette chambre, qui peut coulisser axialement. La force délivrée par le ressort de rappel 50 est nettement inférieure à celle délivrée par le ressort de poussée 46.

Le pion calibré 52 présente un jeu réduit avec l'alésage de la chambre de contrôle 48 le recevant, qui constitue un passage de fluide calibré pour former un amortisseur hydraulique se vidant à une vitesse lente dépendant de ce jeu. En particulier on peut utiliser pour le pion calibré 52 un rouleau de roulement à rouleaux, présentant à la fois une précision élevée, un bon état de surface et un coût très réduit. En variante on peut utiliser pour ce pion calibré 52 une bille ajustée dans l'alésage.

En particulier la dynamique de l'amortisseur hydraulique donne au boisseau 40 une vitesse de détente nettement inférieure à celle du mouvement oscillant de la suspension.

Le ressort de rappel 50 prend appui vers le haut sur une bille de clapet 54 fermant un perçage supérieur de cette chambre axiale débouchant sur le dessus du boisseau 40. Ce clapet permet en particulier une purge plus rapide de l'air contenu dans la chambre de contrôle 48, s'échappant par le perçage du dessus lors de l'assemblage et des premiers fonctionnements de l'amortisseur hydraulique.

La base du pion calibré 52 prend appui sur un support inférieur 56, lui-même en appui sur le couvercle d'extrémité avant 14 du corps extérieur. En particulier le support inférieur 56 peut être réalisé de manière économique par décolletage, par frittage de poudres métalliques, au par moulage d'une matière plastique.

Le tube de butée 12 comporte un perçage additionnel inférieur de loi à vide 60, qui est découvert quand le boisseau 40 est dans une position haute présentée figure 5a, et deux perçages additionnels supérieurs de loi en charge 62, qui sont découverts quand ce boisseau est dans une position basse présentée figure 5b.

La figure 6 présente l'effort de freinage F sur la butée hydraulique en fonction de la course C de cette butée. L'arrivée sur la butée hydraulique se fait pour une course C de 0mm.

Avec un véhicule peu chargé la position moyenne de la tige de l'amortisseur 20 se trouve assez haute pour que le ressort de poussée 46 applique peu ou pas de charge sur le boisseau 40, comme présenté figure 5a.

Le ressort de rappel 50 prenant appui par l'intermédiaire du pion calibré 52 et du support inférieur 56 sur le couvercle d'extrémité 14, tend à remonter le boisseau 40 dans la position présentée figure 5a, le perçage additionnel inférieur 60 étant ouvert. Lors d'une arrivée de la tige 20 vers la fin de course, la butée d'attaque comporte une faible raideur présentée par la première courbe 70, assurant le confort.

Pendant cette arrivée rapide de la tige 20 sur la butée de fin de course, la chambre de contrôle 48 de l'amortisseur hydraulique n'a pas le temps de se vider par le jeu autour du pion calibré 52, à cause de la dynamique lente de cet amortisseur. Le boisseau 40 reste dans sa position haute.

Avec un véhicule fortement chargé la position moyenne de la tige de l'amortisseur 20 se trouve assez basse pour que le ressort de poussée 46 s'opposant au ressort de rappel 50, agisse assez fortement et pendant un temps suffisamment long pour repousser vers le bas le boisseau 40, en vidant progressivement la chambre de contrôle 48 par le jeu autour du pion calibré 52. Comme présenté figure 5b, les perçages additionnels supérieurs 62 sont alors ouverts.

Lors d'une arrivée de la tige 20 vers la fin de course, la butée d'attaque comporte une forte raideur présentée par la deuxième courbe 72. La deuxième courbe 72 présente un freinage s'accroissant beaucoup plus rapidement, qui délivre en fin de course une force maximum nettement supérieure qui est augmentée de 260daN.

La course du boisseau 40 vers le bas vidant la chambre de contrôle 48, se fait après l'application par le ressort de poussée 46 d'une force pendant une durée minimum de plusieurs secondes, avantageusement plus de trois secondes, qui peut être d'environ cinq à dix secondes. Dans ce cas on est suffisamment loin de la période donnée par la fréquence d'oscillation de la suspension d'un véhicule, qui est d'environ 1 Hz.

On réalise ainsi de manière simple et économique, avec peu de modifications d'un amortisseur hydraulique existant, une butée de fin de course progressive qui s'adapte automatiquement à la charge du véhicule.

D'une manière générale la butée de fin de course peut comporter seulement les perçages additionnels 60, 62 sur le tube de butée 12, ou aussi en combinaison des perçages 18 sur la chemise 10, comme présenté figure 1.

On notera que l'amortisseur télescopique comportant la butée hydraulique selon l'invention, peut être disposé dans le véhicule automobile suivant toutes les directions. En particulier le côté avant peut être tourné vers le bas ou vers le haut, le corps de l'amortisseur 2 peut être fixé à la suspension ou à la caisse du véhicule.

## Revendications

1. Butée hydraulique pour l'amortissement d'une fin de course d'un mouvement oscillant, comprenant une chemise annulaire (10) ajustée autour d'un cylindre (12) fixé à un corps (2), prévue pour se déplacer axialement vers l'avant lors d'une compression en refoulant un fluide vers une chambre intérieure (26) formée dans ce cylindre (12) en passant par des perçages répartis axialement (18), **caractérisée en ce que** la chambre intérieure (26) comporte un boisseau (40) coulissant dans le cylindre (12) en fermant ou ouvrant des perçages additionnels (60, 62) de ce cylindre (12), ce boisseau (40) étant relié à la chemise annulaire (10) par un ressort de poussée (46) qui dans la fin de course pousse le boisseau (40) vers l'avant, et étant relié au corps (2) par un amortisseur hydraulique, et par un ressort de rappel (50) qui le rappel vers l'arrière en développant un force inférieure à celle du ressort de poussée (46).

2. Butée hydraulique selon la revendication 1, **caractérisée en ce que** l'amortisseur hydraulique comporte des passages calibrés du fluide donnant pour le boisseau (40) à partir d'une position comprimée, sous l'effet du ressort de rappel (50) un temps de détente complet supérieur à trois secondes.

3. Butée hydraulique selon la revendication 1 ou 2, **caractérisée en ce que** les perçages additionnels (60, 62) présentent une section de passage libre qui est réduite quand le boisseau (40) est dans la position la plus en avant.

4. Butée hydraulique selon l'une quelconque des revendications précédentes, **caractérisée en ce que** le ressort de poussée (46) est un ressort hélicoïdal disposé en arrière du boisseau (40).

5. Butée hydraulique selon l'une quelconque des revendications précédentes, **caractérisée en ce que** le boisseau (40) comporte à l'intérieur une chambre hydraulique de contrôle (48), fermée vers l'avant par un pion (52) ajusté dans un alésage de ce boisseau (40) formant l'amortisseur hydraulique.

6. Butée hydraulique selon la revendication 5, **caractérisée en ce que** le ressort de rappel (50) est disposé à l'intérieur de la chambre hydraulique de contrôle (48).

7. Butée hydraulique selon l'une quelconque des revendications précédentes, **caractérisée en ce que** l'amortisseur hydraulique comporte une chambre hydraulique de contrôle (48) disposant d'un clapet permettant une sortie du fluide en dehors de cette chambre de contrôle (48).

8. Butée hydraulique selon les revendications 6 et 7, **caractérisée en ce que** le ressort de rappel (50) presse une bille (54) formant le clapet.

9. Amortisseur télescopique prévu pour une suspension de véhicule, **caractérisé en ce qu'**il comporte une butée hydraulique de fin de course selon l'une quelconque des revendications précédentes.

10. Véhicule automobile équipé de suspensions, **caractérisé en ce que** ces suspensions comportent des butées hydrauliques selon l'une quelconque des revendications 1 à 8.

## Patentansprüche

1. Hydraulischer Anschlag für das Dämpfen eines Hubendes einer Schwingungsbewegung, der eine ringförmige Hülse (10) umfasst, die um einen Zylinder (12), der an einem Körper (2) befestigt ist, justiert ist, die dazu bestimmt ist, sich axial bei einer Kompression nach vorn zu verlagern, wobei ein Fluid zu einer Innenkammer (26) gefördert wird, die in diesem Zylinder (12) gebildet ist, indem es durch Bohrungen (18), die axial verteilt sind, durchgeht, **dadurch gekennzeichnet, dass** die Innenkammer (26) einen Kugelhahn (40) umfasst, der in diesem Zylinder (12) gleitet, indem er zusätzliche Bohrungen (60, 62) dieses Zylinders (12) schließt oder öffnet, wobei dieser Kugelhahn (40) mit der ringförmigen Hülse (10) durch eine Schubfeder (46) verbunden ist, die in dem Hubende den Kugelhahn (40) nach vorn schiebt, und mit dem Körper (2) durch einen hydraulischen Dämpfer verbunden ist, und durch eine Rückstellfeder (50), die ihn nach hinten zurückstellt, indem eine Kraft entwickelt wird, die kleiner ist als die der Schubfeder (46).

2. Hydraulischer Anschlag nach Anspruch 1, **dadurch gekennzeichnet, dass** der hydraulische Dämpfer kalibrierte Passagen des Fluids umfasst, die für den Kugelhahn (40) ausgehend von einer komprimierten Position, unter der Einwirkung der Rückstellfeder (50) eine komplette Entspannungszeit größer als drei Sekunden ergibt.

3. Hydraulischer Anschlag nach Anspruch 1 oder 2, **dadurch gekennzeichnet, dass** die zusätzlichen Bohrungen (60, 62) einen freien Durchgangsquerschnitt aufweisen, der reduziert ist, wenn der Kugelhahn (40) in der am weitesten vorderen Position ist.

4. Hydraulischer Anschlag nach einem der vorstehenden Ansprüche, **dadurch gekennzeichnet, dass** die Schubfeder (46) eine Schraubenfeder ist, die hinter dem Kugelhahn (40) angeordnet ist.

5. Hydraulischer Anschlag nach einem der vorstehenden Ansprüche, **dadurch gekennzeichnet, dass** der Kugelhahn (40) in dem Inneren eine hydraulische Steuerkammer (48) umfasst, die nach vorn durch einen Klotz (52) geschlossen ist, der in einer Bohrung dieses Kugelhahns (40) justiert ist, der den hydraulischen Dämpfer bildet.

6. Hydraulischer Anschlag nach Anspruch 5, **dadurch gekennzeichnet, dass** die Rückstellfeder (50) in dem Inneren der hydraulischen Steuerkammer (48) angeordnet ist.

7. Hydraulischer Anschlag nach einem der vorstehenden Ansprüche, **dadurch gekennzeichnet, dass** der hydraulische Dämpfer eine hydraulische Steuerkammer (48) umfasst, die über ein Ventil verfügt, das ein Austreten des Fluids aus dieser Steuerkammer (48) erlaubt.

8. Hydraulischer Anschlag nach den Ansprüchen 6 und 7, **dadurch gekennzeichnet, dass** die Rückstellfeder (50) eine Kugel (54), die das Ventil bildet, drückt.

9. Teleskopdämpfer, der für eine Fahrzeugaufhängung vorgesehen ist, **dadurch gekennzeichnet, dass** er einen hydraulischen Hubendeanschlag nach einem der vorstehenden Ansprüche umfasst.

10. Kraftfahrzeug, das mit Aufhängungen ausgestattet ist, **dadurch gekennzeichnet, dass** diese Aufhängungen hydraulische Anschläge nach einem der Ansprüche 1 bis 8 umfassen.

## Claims

1. A hydraulic stop for the damping of an end-of-travel of an oscillating movement, including an annular jacket (10) adjusted around a cylinder (12) attached to a body (2), provided for moving axially forward during a compression by discharging a fluid towards an interior chamber (26) formed in this cylinder (12) by passing through axially distributed bores (18), **characterized in that** the interior chamber (26) comprises a plug (40) sliding in the cylinder (12) by closing or opening additional bores (60, 62) of this cylinder (12), this plug (40) being connected to the annular jacket (10) by a thrust spring (46) which in the end of travel pushes the plug (40) forward, and being connected to the body (2) by a hydraulic shock absorber, and by a return spring (50) which returns it rearward by developing a force less than that of the thrust spring (46).

2. The hydraulic stop according to Claim 1, **characterized in that** the hydraulic shock absorber comprises calibrated passages of the fluid, giving for the plug (40) starting from a compressed position, under the effect of the return spring (50), a complete expansion time greater than three seconds.

3. The hydraulic stop according to Claim 1 or 2, **characterized in that** the additional bores (60, 62) have a free passage section which is reduced when the plug (40) is in the most forward position.

4. The hydraulic stop according to any one of the preceding claims, **characterized in that** the thrust spring (46) is a helicoidal spring disposed behind the plug (40).

5. The hydraulic stop according to any one of the preceding claims, **characterized in that** the plug (40) comprises in the interior a hydraulic control chamber (48), closed towards the front by a pin (52) fitted in a bore of this plug (40) forming the hydraulic shock absorber.

6. The hydraulic stop according to Claim 5, **characterized in that** the return spring (50) is disposed in the interior of the hydraulic control chamber (48).

7. The hydraulic stop according to any one of the preceding claims, **characterized in that** the hydraulic shock absorber comprises a hydraulic control chamber (48) having a valve permitting an exit of the fluid outside this control chamber (48).

8. The hydraulic stop according to Claims 6 and 7, **characterized in that** the return spring (50) presses a ball (54) forming the valve.

9. A telescopic shock absorber provided for a vehicle suspension, **characterized in that** it comprises a hydraulic end-of-travel stop according to any one of the preceding claims.

10. A motor vehicle equipped with suspensions, **characterized in that** these suspensions comprise hydraulic stops according to any one of Claims 1 to 8.
